# EUROPEAN PATENT APPLICATION

(11) **EP 1 559 927 A1**
(43) Date of publication of application: **03.08.2005**
(21) Application number: 05001774.8
(22) Date of filing: 28.01.2005
(51) Int. Cl.: F16G 11/10, A44B 11/06, A43C 7/08

(54) **Buckle**

(30) Priority: 29.01.2004 JP 2004021500
(71) Applicant: YKK Corporation, Chiyoda-ku, Tokyo 101-8642 (JP)
(72) Inventor: Takahashi, Yoshinobu, Uozu-shi Toyama 937-0857 (JP)
(74) Representative: Casalonga, Axel

(57) **Abstract**

An opening (21) for strap through which an end portion (12) of a strap (11) is inserted, an accommodation portion (23) that accommodates the end portion (12) of the strap (11) inserted through the opening (21) for strap by a predetermined length, and a pair of holding portions (40) that sandwiches and holds the strap (11) that has been accommodated in the accommodation portion (23) are formed. The pair of holding portions (40) has a substantially V-shape in which the distance between one end sides thereof is shorter than that between the other end sides thereof, and arranged in an inclined manner relative to the insertion axis (13) such that one end sides are situated nearer to the opening (21) for strap than the other end sides.

## Description

### 1. FIELD OF THE INVENTION

The present invention relates to a buckle attached to the end portion of a strap.

### 2. DESCRIPTION OF RELATED ART

Straps are being used for many purposes. For example, straps are frequently used in the sealing of portions of the openings or the like, or adjustment of dimensions or the like in shoes, bags, clothes, or accessories, as well as for connecting the goods with each other or fixing goods and so on. As described above, straps are used in variety of situations.

The strap mentioned here is a general term of so-called strap-like members capable of binding goods or the like, which include a widely used strap, wire, cable or the like, as well as a tape or belt.

The end portion of the above strap is processed in general. That is, in a state where the strap has been simply cut off and the end portion is not processed, the obtained cross-section may become inferior in terms of appearance or hand feeling. Further, in woven materials, fraying occurs in some cases.

Making a knot can be taken as a simple example of the process applied to the end portion of the strap. Further, a dedicated buckle is attached to the end portion in order to increase operability or fanciness.

As the buckle, the one that enfolds the end portion (an area including a predetermined length from the leading end of the strap) so as to eliminate troublesome task of making a knot has been developed.

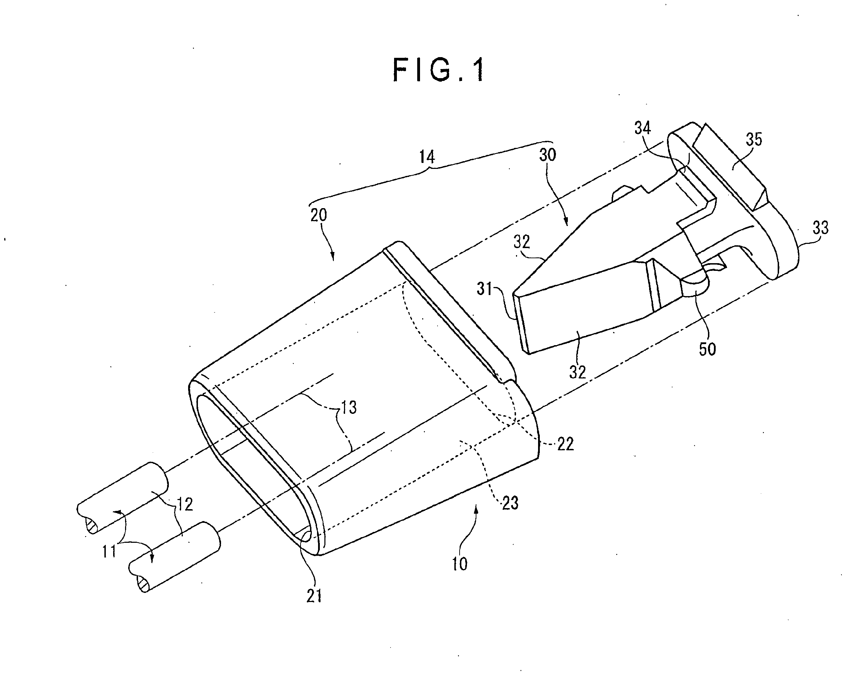

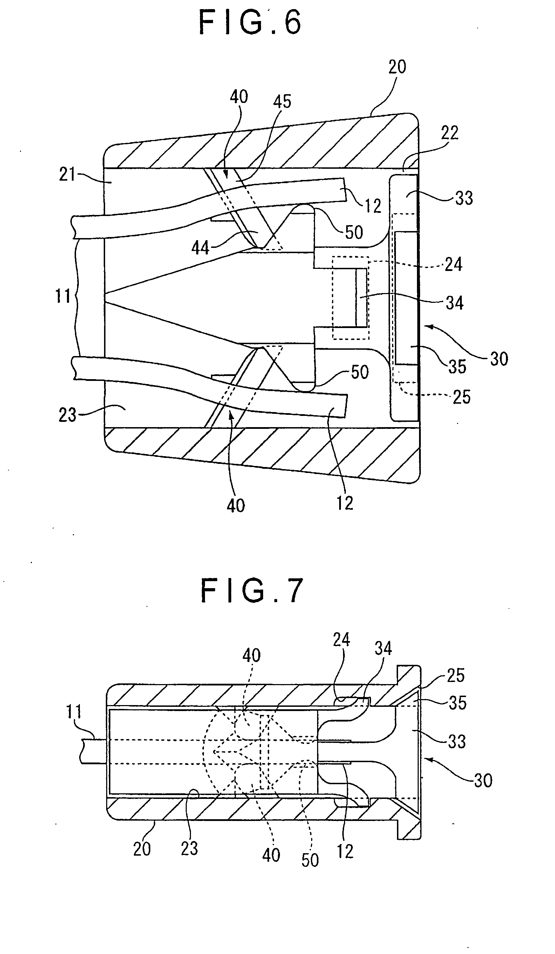

To be specific, the following configuration has been available: the end portion of a strap is inserted into a buckle main body having a substantially tubular shape, a locking tool is inserted into the main body through the opposite side, and the end portion of the strap is engaged with a projection formed in the locking tool, thereby establishing a secure attachment between the strap and buckle (refer to, for example, Document 1: Jpn. Pat. Laid-Open Publication No. Hei 9-289906, page 4, FIGS. 1 and 6).

Further, another configuration in which the direction that a projection bites into a strap is set to the intersection direction of the strap with the projection and leading end of the strap is bent to reduce the length of the buckle has been known (refer to, for example, Document 2: Jpn. Pat. Laid-Open Publication No. 2002-17411, pages 3 and 4, FIGS. 1 to 3).

In the configurations of the above documents 1 and 2, the buckle main body and strap are securely attached to each other in the manner that the projection bites into the strap. In general, the strap whose surface is covered by a knit material is widely used. In such a case, the projection is caught by the mesh, thereby obtaining a satisfactory engaging condition.

Recently, a strap using an elastomer such as a rubber material or the like as a core material has been appeared. In the strap made of the elastomer material, when the above-mentioned projection bites into the strap, the core material of the strap is easily deformed, so that a satisfactory engaging condition cannot be obtained. Even in the case of the above-mentioned strap whose surface is covered by a knit material, deformation of the core material allows the projection to slip through the knit cover, so that a desired engaging condition cannot be obtained.

As described above, a satisfactory fixing capability cannot be obtained in the buckle having a structure in which the projection is allowed to abut against and bite into the surface of the strap, so that the buckle may be disengaged from the strap.

### SUMMARY OF THE INVENTION

A main object of the present invention is to provide a buckle capable of improving an engaging capability with the strap.

According to an aspect of the present invention, there is provided a buckle including a main body that can accommodate an end portion of a strap along a predetermined insertion axis, the main body including a socket having a substantially tubular shape and a plug to be inserted into and engaged with the socket, the socket having an opening for strap through which the end portion of the strap is inserted into the inside of the socket, an opening for plug through which the plug is inserted into the inside of the socket, and an accommodation portion that communicates with the opening for strap and opening for plug and accommodates the end portion of the strap that has been inserted through the opening for strap by a predetermined length, in which one of the socket or plug has a pair of holding portions that sandwiches and holds the strap that has been accommodated in the accommodation portion, and the other one of the socket or plug has a press portion that presses the strap that has been accommodated in the accommodation portion against the pair of holding portions in a state where the plug is engaged with the socket.

In the present invention, after the end portion of the strap has been inserted through the opening for strap into the socket and accommodated in the accommodate portion, the plug is inserted into the opening for plug. The end portion of the strap that has been accommodated in the accommodation portion is pressed by the press portion of the plug (or socket) to be introduced into the pair of holding portions, and is sandwiched and held between the holding portions of the socket (or plug).

That is, when the plug is inserted into and engaged with the socket, the strap that has been accommodated in the accommodation portion is pressed against the holding portion by the press portion, so that the end portion of the strap is locked between the holding portions, so that the strap and main body are tightly fixed to each other.

In the present invention, it is preferable that the pair of holding portions has a substantially V-shape in which the distance between one end sides thereof is shorter than that between the other end sides thereof, and be arranged in an inclined manner relative to the insertion axis such that one end sides are situated nearer to the opening for strap than the other end sides.

In the above configuration, when pull force is applied to the strap in the direction that the strap is away from the main body, the end portion of the strap that has been held between the holding portions is to be shifted to the opening for strap side. However, since the holding portions are arranged in an inclined manner, the end portion of the strap is pulled into the narrow side of the substantially V-shape and further tightly held between the holding portions. Therefore, even if the strap is made of an elastomer material or the like, the end portion of the strap is securely locked in the holding portions, preventing inconvenience that the strap is escaped from the buckle. Accordingly, the fixing capability can be increased.

In the present invention, it is preferable that the plug has a tapered leading end to be inserted into the accommodation portion and a cap that covers the opening for plug on the side opposite to the tapered leading end.

In the above configuration, by inserting the plug through the opening for plug in a state where the strap has been inserted through the opening for strap on the side opposite to the opening for plug, locking of the strap can surely be realized.

Since, in particular, the insertion of the plug is performed from the side opposite to the insertion side of the strap, the plug serves to prevent the strap from being escaped. Thus, secure locking of the strap can be maintained.

At this time, a tapered tip portion of the plug makes it easy to perform the insertion operation.

Further, the plug has the cap, so that it is possible to seal the opening for plug in an engaging state, which improves the appearance of the buckle and prevents dust from entering the inside of the buckle.

In the present invention, it is preferable that the accommodation portion has a space into which two straps can be inserted in parallel, and the plug be inserted between the two straps that have been accommodated in the accommodation portion.

With this configuration, the end portions of the two straps can be bound together by the buckle. For example, a looped strap is frequently used in a slide fastener of an outfit for protection against the cold so as to make it easy to handle the fastener with a heavy-weight glove for cold weather is on. In binding end portions of such a looped strap, the use of the buckle according to the present invention allows a process applied to the end portion of the strap and binding of the end portions of the strap to be performed simultaneously, so that an additional binding operation can be omitted.

In the present invention, it is preferable that the press portion be situated nearer to the opening for plug than the pair of holding portions in a state where the plug is engaged with the socket.

With this configuration, the strap is pressed by the holding portions and press portion from the opposite sides thereof at the different positions in the direction of the insertion axis, so that the strap is pressed against the holding portions. At this time, the strap is bent in a crank-shape due to misalignment between the holding portions and press portion in the direction of the insertion axis, increasing resistivity to pull force applied to the strap and contributing to reduction of the length of the main body in the direction of the insertion axis.

In the present invention, it is preferable that the press portion extends along the insertion axis, and the press portion enters between the pair of holding portions in a state where the plug is engaged with the socket.

With this configuration, the press portion enters between the holding portions at the time slightly before an engagement between the socket and plug has been completely established. Thus, by allowing the strap to follow the press portion previously before the insertion operation, the strap can smoothly be guided between the holding portions, and the strap is tightly held between the holding portions.

In the present invention, it is preferable that the press portion has a guide groove that restrains the position of the strap and guides the strap between the pair of holding portions in a state where the plug is engaged with the socket.

In the above configuration, the end portion of the strap is previously introduced into the guide groove of the press portion before the engagement between the socket and plug has been established, so that the strap is automatically introduced between the holding portions as the plug is moved into the inside of the socket. At the time when the plug has been engaged with the socket, the strap is pressed against the holding portions by the press portion and is tightly held between the holding portions.

In the present invention, it is preferable that the guide groove can hold the end portion of the strap along the plug, the end portion of the strap having been inserted into the socket through the opening for strap and exposed from the opening for plug after being passed through the socket.

That is, in the present invention, the end portion of the strap is firstly inserted into the accommodation portion, and the plug is inserted into the socket to allow the press portion to introduce the strap into the holding portions. At this time, the leading end of the strap may hide in the accommodation portion. In this case, the end portion of the strap is stopped in the accommodation portion. In this state, when the plug approaches, the end portion of the strap is pressed by the press portion and introduced between the holding portions.

Further, after having been passed through the socket and pulled out from the opening for plug, the strap may be introduced into the socket with the end portion thereof attached to the plug. Since the plug and strap are integrally moved, a stable holding operation of the holding portions can be expected.

In the above configuration, the guide groove can hold the end portion of the strap along the plug, making it easy to perform the operation of integrally introduce the plug and strap into the socket. The guide groove can be made in a shape that the strap is not escaped even when the hand is not placed on the strap, more specifically, in a shape that inside width of the guide groove is slightly narrower than the outer diameter of the strap or entrance of the guide groove is narrower then the depth side thereof.

In the present invention, it is preferable that the pair of holding portions be formed by a ridge portion continued from a part of the main body.

This eliminates the need of separately manufacturing the holding portions from the main body (socket or plug) and attaching it thereto, facilitating a manufacturing process. In particular, in the case where the main body is resin-molded, the main body and holding portions are integrally formed to improve the efficiency of a manufacturing process.

In the present invention, it is preferable that the ridge portion has an inclined plane that is inclined relative to the insertion axis on the side opposite to the opening for strap, a cut portion having a substantially V-shape be formed on the inclined plane, and the pair of the holding portions be formed by the periphery along the inclined plane of the cut portion.

In the above configuration, it is possible to easily form the pair of holding portions by the inclined plane and substantially V-shaped cut portion.

In the above pair of holding portions, the inclination relative to each other can be set depending on the arrangement angle of the V-shaped cut portion, and the inclination relative to the insertion axis can be set depending on the arrangement angle of the inclined plane. Therefore, the angle of inclination can arbitrarily be set with certainty, so that manufacturing can surely and easily be performed.

In the present invention, it is preferable that, in the pair of holding portions, the opposite sides thereof that are spaced apart from each other serve as widely-angled guide portions, and the opposite sides thereof that are approximate to each other serve as steeply-angled engagement portions.

Accordingly, the V-shaped cut portion has a two-tiered V-shape, or substantially Y-shape. In the guide portions on the entrance side of the Y-shape, the width of the opening is widened. Thus, even if the position of the strap is greatly shifted, the strap can be introduced between the holding portions. As a result, the strap can be securely held between the holding portions. When pull force is applied to the strap, the strap is pulled into the engagement portions on the depth side of the Y-shape and is securely engaged between the narrowed holding portions. Therefore, it is possible to surely increase fixing capability.

In the present invention, it is preferable that the angle of inclination between the pair of holding portions and insertion axis be set to not less than 30° and less than 90°.

When the pair of the holding portions according to the present invention is arranged at the above angle, it is possible to secure a satisfactory locked state due to pull force applied to the strap. When the angle of inclination is set to 90° or more, in other words, when the holding portions cross the insertion axis at right angles or when the leading end of the holding portions faces the opening for strap side, the locked state due to pull force applied to the strap cannot be obtained. When the angle of inclination is set to 30° or less, the strap and holding portions are substantially in line with each other, so that a locked state due to pull force applied to the strap cannot be obtained.

More preferably, the angle of inclination between the pair of holding portions and insertion axis is set to not less than 45° and less than 80°.

When this angle range is adopted, a locked state due to pull force applied to the strap can further be secured.

Most preferably, the angle of inclination between the pair of holding portions and insertion axis is set to not less than 55° and less than 65°.

When this angle range is adopted, the most favorable locked state due to pull force applied to the strap can be obtained.

In the present invention, it is preferable that the pair of holding portions be curved, and the angle of inclination be the average angle between an effective region that substantially holds the strap and the insertion axis.

The holding portions may be formed in a linear manner as well as a curved manner. For example, the angle of inclination between the holding portions is made large at the entrance side thereof to make it easy to introduce the strap between the holding portions. On the other hand, the angle of inclination between the holding portions is made small at the depth side thereof to increase the locking effect for the strap due to pull force. In this case, it is preferable that the angle of inclination of the substantially effective region, which is the average angle related to the locking of the strap, fall within the above-mentioned angle range.

### BRIEF DESCRIPTION OF THE DRAWINGS

FIG. 1 is an exploded perspective view showing a socket and plug according to a first embodiment of the present invention;
FIG. 2 is a vertical cross-sectional view of the socket according to the first embodiment;
FIG. 3 is a side view of the plug according to the first embodiment;
FIG. 4 is a horizontal cross-sectional view of the socket according to the first embodiment;
FIG. 5 is a plan view of the plug according to the first embodiment;
FIG. 6 is a horizontal cross-sectional view showing an engaging state between the socket and plug according to the first embodiment;
FIG. 7 is a vertical cross-sectional view showing an engaging state between the socket and plug according to the first embodiment;
FIG. 8 is a front view showing an engaging state between the socket and plug according to the first embodiment;
FIG. 9 is a partly broken perspective view showing an engaging state between the socket and plug according to the first embodiment;
FIG. 10 is an exploded perspective view showing a socket and plug according to a second embodiment of the present invention;
FIG. 11 is a side view of the plug according to the second embodiment;
FIG. 12 is a vertical cross-sectional view of the socket according to the second embodiment;
FIG. 13 is a partly omitted horizontal cross-sectional view showing an engaging state between the socket and plug according to the second embodiment;
FIG. 14 is a perspective view showing of a plug according to a third embodiment of the present invention;
FIG. 15 is a partly omitted horizontal cross-sectional view showing an engaging state between the socket and plug according to the third embodiment;
FIG. 16 is an exploded perspective view showing a socket and plug according to a modification of the present invention; and
FIG. 17 is a partly omitted horizontal cross-sectional view showing an engaging state between the socket and plug according to the modification.

### DETAILED DESCRIPTION OF PREFERRED EMBODIMENTS

Embodiments of the present invention will be described below with reference to the accompanying drawings.

FIGS. 1 to 9 show a buckle according to a first embodiment of the present invention.

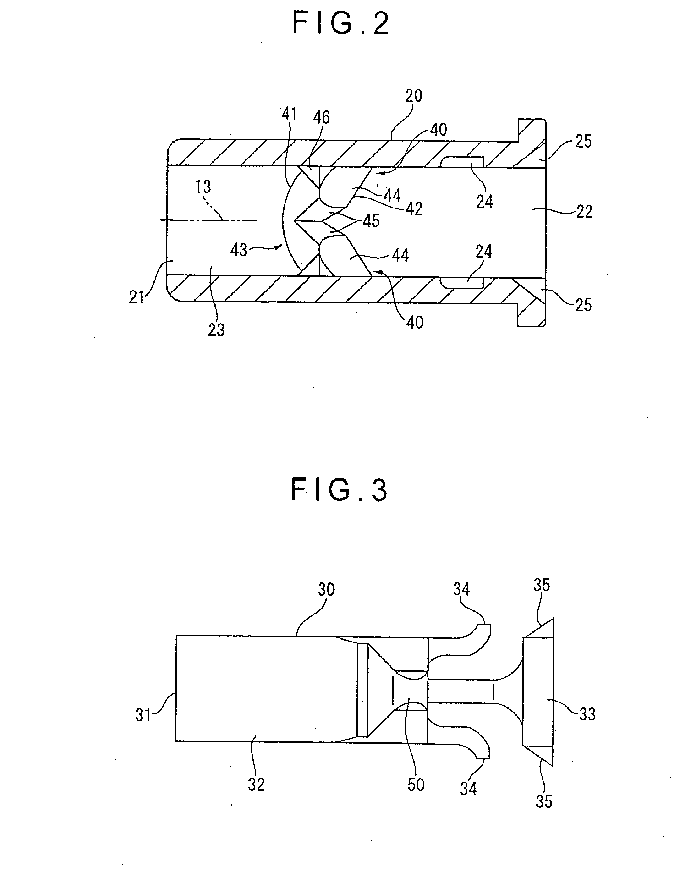

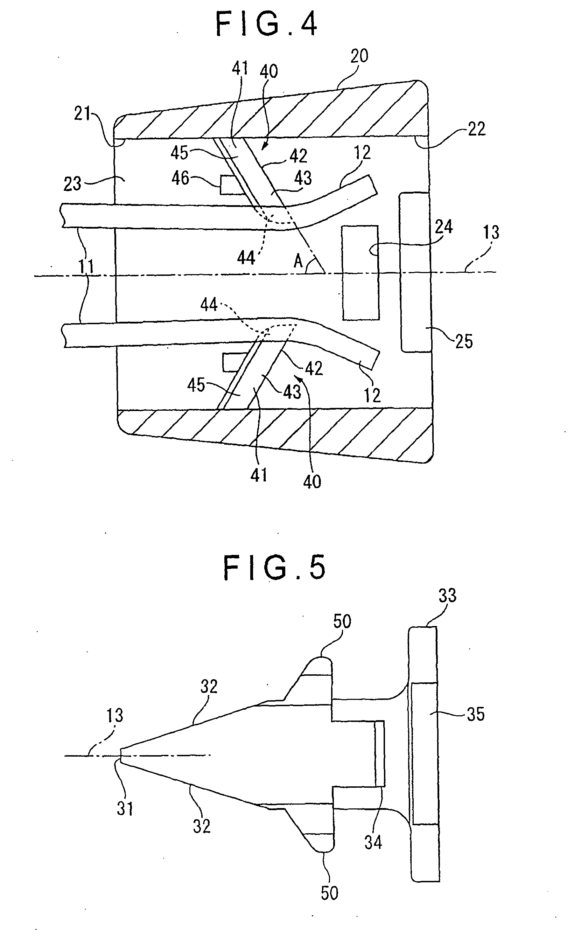

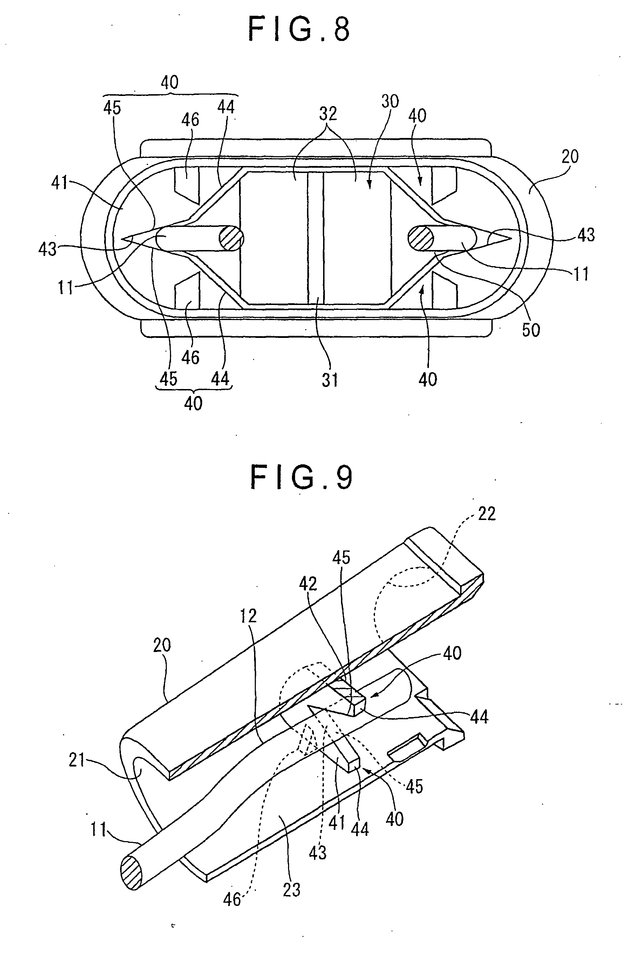

FIG. 1 is an exploded perspective view showing a socket and plug according to the first embodiment. FIG. 2 is a vertical cross-sectional view of the socket, FIG. 3 is a side view of the plug, FIG. 4 is a horizontal cross-sectional view of the socket, and FIG. 5 is a plan view of the plug. FIG. 6 is a horizontal cross-sectional view showing an engaging state between the socket and plug according to the first embodiment, FIG. 7 is a vertical cross-sectional view showing the engaging state, FIG. 8 is a front view showing the engaging state, and FIG. 9 is a partly broken perspective view showing the engaging state.

As shown in FIG. 1, a buckle 10 has a main body 14 capable of accommodating an end portion 12 of a strap 11 along a predetermined insertion axis 13.

The main body 14 includes a socket 20 having a substantially tubular shape and a plug 30 to be inserted into and engaged with the inside of the socket 20. Each of the socket 20 and plug 30 is manufactured as, for example, a synthetic resin molded article.

An opening 21 for strap is formed at one end of the socket 20, and an opening 22 for plug is formed at the opposite end. An accommodating portion 23 is so formed as to pierce the inside of the socket 20 from the opening 21 for strap to the opening 22 for plug.

The end portion 12 of the strap 11 described above can be inserted into the opening 21 for strap. The accommodation portion 23 can accommodate the end portion 12 of the strap 11 that has been inserted from the opening 21 for strap by a predetermined length (see FIGS. 4, 6, and 7).

The aforementioned plug 30 can be inserted into the opening 22 for plug. The accommodation portion 23 has a space to which two straps 11 can be inserted in parallel. The plug 30 is inserted between the two straps 11 that have been accommodated in the accommodation portion 23 (see FIGS. 1, 6, and 8).

The plug 30 is inserted into the accommodation portion 23 through the opening 22 for plug. The plug 30 has a leading end 31 to be inserted into the accommodation portion 23. In the portion vicinity of the leading end 31, a tapered shape is formed by inclined planes 32 which are formed on both sides of the tip portion of the plug 30. On the side opposite to the tapered tip portion, a cap 33 that covers the opening 22 for plug is formed.

By providing the tapered shape formed by the inclined planes 32 as described above, the plug 30 can smoothly be inserted between the two straps 11 that have been accommodated in the accommodation portion 23.

Further, by providing the cap 33, it is possible to seal the opening 22 for plug in a state where engagement between the plug 30 and socket 20 is established, which improves the appearance of the buckle and prevents dust from entering the inside of the buckle.

The plug 30 has projections 34 for engagement on the upper and lower surfaces thereof, and has projections 35 for restraint on the upper and lower sides of the cap 33.

The projection 34 for engagement is formed at the leading end of an elastic deformable projected portion and can be engaged with a concave 24 formed inside of the socket 20. The engagement established between the projection 34 for engagement and concave 24 restrains ejection of the plug 30 and maintains an engaging state between the socket 20 and plug 30.

The projection 35 for restraint can be engaged with a concave 25 formed in the periphery of the opening 22 for plug of the socket 20. The engagement between the projection 35 for restraint and concave 25 restrains the plug 30 from entering into the socket 20 beyond a predetermined engaging state.

A pair of holding portions 40 that holds the straps 11 accommodated in the accommodation portion 23 is formed in the accommodation portion 23.

In the present embodiment, two straps 11 are accommodated in the accommodation portion 23 and bound together, in which a pair of holding portions 40 is formed for each strap 11, that is, two pairs of four holding portions 40 are formed in total (see FIG. 8).

A substantially V-shape is formed by the one pair of two holding portions 40, in which the distance between one end sides thereof is shorter than that between the other sides thereof. Further, one end sides of the holding portions 40 are situated nearer to the opening 21 for strap than the other sides thereof, that is, each of the holding portions 40 is inclined relative to the insertion axis 13 (see FIGS. 2, 8, and 9).

The pair of holding portions 40 is formed by a plate-like ridge portion 41 continued from the inside of the socket 20. The ridge portion 41 has an inclined plane 42 that is inclined relative to the insertion axis 13 in the direction opposite to the opening 21 for strap (see FIGS. 4 and 6).

A cut portion 43 is formed in the ridge portion 41. The cut portion 43 has a substantially V-shape viewed from the inclined plane 42 side. The pair of holding portions 40 is formed by the periphery along the inclined plane 42 of the cut portion 43 (see FIGS. 2, 8, and 9).

When the strap 11 is pulled so that the strap 11 is escaped from the accommodation portion 23 in a state where the strap 11 is held in the cut portion 43, the surface of the strap 11 slidingly contacts the holding portions 40. In particular, on the inclined plane 42 side (side opposite to the opening 21 for strap, that is, opening 22 for plug side), the surface of the strap 11 is scraped.

Here, the inclined plane 42 is inclined relative to the insertion axis 13, the tip side of the inclined plane 42 is situated nearer the side opposite to the opening 21 for strap, that is, the opening 22 for plug side, and in the cut portion 43 formed from the tip side of the inclined plane 42, the depth side of the cut portion 43 is situated nearer to the opening 21 for strap than the opening portion of the cut portion 43.

That is, in the pair of holding portions 40 that is formed by the periphery of the cut portion 43, when being pulled from the opening 21 for strap side, the strap 11 is forced into the depth side of the cut portion 43, or forced into the side on which the ends of the holding portions 40 are approximate to each other while the surface of the strap 11 is scraped.

The above movement allows the strap 11 to be further tightly held between the pair of holding portions 40, so that it becomes difficult to pull out the strap 11 any more.

In the pair of holding portions 40, the opposite sides thereof that are spaced apart from each other serve as widely-angled guide portions 44, and the opposite sides thereof that are approximate to each other serve as steeply-angled engagement portions 45. The pair of holding portions 40 has a substantially Y-shape, or two-tiered V-shape as a whole.

Under the above configuration, a stepped portion having cone-like projections or saw toothed portions or the like may be formed on the surfaces of the engagement portions 45, and the pair of holding portions 40 may have a substantially Y-shape, or two-tiered V-shape as a whole.

The guide portions 44 serve to widen the frontage of the cut portion 43 on the opening side. Thus, even in the case where the strap 11 is somewhat deviated when being accommodated in the cut portion 43, the strap 11 can be easily and surely guided to the cut portion 43.

The strap 11 is fastened by and locked in the steeply-angled engagement portions 45 without fail and is prevented from escaping from the buckle. As a result, it is possible to secure a satisfactory engaging capability.

The two-tiered holding portions 40 described above can allow the strap 11 to surely be accommodated and locked. In the present embodiment, the angle of inclination A (see FIG. 4) between the holding portions 40 and insertion axis 13 is set to 60°.

When the angle of inclination A is set to 90° or more, in other words, when the holding portions 40 cross the insertion axis 13 at right angles or when the leading end of the holding portions 40 faces the opening 21 for strap side, the locked state due to pull force applied to the strap 11 cannot be obtained. When the angle of inclination A is set to 30° or less, the strap 11 and holding portions 40 are substantially in line with each other, so that the locked state due to pull force applied to the strap 11 cannot be obtained.

Therefore, the angle of inclination A must fall within a range of not less than 30° to less than 90°, preferably, a range of not less than 45° to less than 80°. Further, when the angle of inclination A is set to a range of not less than 55° to less than 65° (around 60°), it is possible to secure a satisfactory locked state due to pull force applied to the strap 11.

A press portion 50 is formed on the plug 30. The press portion 50 presses the strap 11 that has been accommodated in the accommodation portion 23 against the holding portions 40 in a state where the socket 20 and plug 30 are engaged with each other (see FIGS. 1, 3, and 5).

The press portion 50 is a projected portion that is expanded laterally from the inclined plane 32 and the position on the side of the cap 33 and has a tapered tip portion whose leading end is rounded.

The press portion 50 is so positioned as to be nearer to the opening 22 for plug than the holding portions 40 in an engaging state between the socket 20 and plug 30 (see FIGS. 6, 7, and 8).

Therefore, when the socket 20 and the plug 30 are engaged with each other, the press portion 50 contacts the surface of the end portion 12 of the strap 11 accommodated in the accommodation portion 23 and presses the strap 11 to the inside of the holding portions 40.

According to the above-mentioned embodiment, the following advantages are obtained.

In the present embodiment, the end portion 12 of the strap 11 is inserted through the opening 21 for strap and accommodated in the accommodation portion 23. The accommodated end portion 12 of the strap 11 is held between the pair of holding portions 40, so that the strap 11 and main body 14 are tightly fixed to each other.

When pull force is applied to the strap 11 in the direction that the strap 11 is away from the main body 14, the end portion 12 of the strap 11 that has been held between the holding portions 40 is to be shifted to the opening 21 for strap side. However, since the holding portions 40 are arranged in an inclined manner, the end portion 12 of the strap 11 is pulled into the narrow side of the substantially V-shape and further tightly held between the holding portions 40.

In particular, the holding portions 40 are formed to be two-tiered configuration including the widely-angled guide portions 44 in which the opposite sides thereof are spaced apart from each other and the steeply-angled engagement portions 45 in which the opposite sides thereof are approximate to each other. Accordingly, the V-shaped cut portion 43 that constitutes the pair of holding portions 40 has a two-tiered V-shape, or substantially Y-shape. In the guide portions 44 on the entrance side of the Y-shape, the width of the opening is widened. Thus, even if the position of the strap 11 is greatly shifted, the strap 11 can be introduced between the holding portions 40. As a result, the strap 11 can be securely held between the holding portions 40. When pull force is applied to the strap 11, the strap 11 is pulled into the engagement portions 45 on the depth side of the Y-shape and is securely engaged between the narrowed holding portions 40. Therefore, it is possible to surely increase the fixing capability.

As described above, according to the buckle 10 of the present embodiment, even if the strap 11 is made of an elastomer material or the like, the end portion 12 of the strap 11 is surely engaged in the holding portions 40, preventing inconvenience that the strap 11 is escaped from the buckle 10. Accordingly, the fixing capability can be increased.

Further, in the present embodiment, the main body 14 is constituted by the socket 20 having a substantially tubular shape and plug 30 to be inserted into and engaged with the inside of the socket 20. As a result, by inserting the plug 30 into the socket 20, the operation of locking the end portion 12 of the strap 11 can easily and surely be performed.

In particular, the opening 21 for strap is formed at one end of the socket 20 and the opening 22 for the plug is formed at the other end. With this configuration, by inserting the plug 30 through the opening 22 for plug after the strap 11 has been inserted through the opening 21 for strap, the strap 11 can surely be locked.

Since, in particular, the insertion of the plug 30 is performed from the side opposite to the insertion side of the strap 11, the plug 30 serves to prevent the strap 11 from being escaped. Thus, secure locking of the strap 11 can be maintained.

Further, a tapered tip portion of the plug 30 makes it easy to perform the insertion operation. Further, the cap 33 that covers the opening 22 for plug is formed at the side opposite to the strap insertion side, so that it is possible to seal the opening 22 for plug in an attachment state between the plug 30 and socket 20, which improves the appearance of the buckle and prevents dust from entering the inside of the buckle.

In the present embodiment, the accommodation portion 23 has a space to which two straps 11 can be inserted in parallel. The plug 30 is inserted between the two straps 11 that have been accommodated in the accommodation portion 23. Thus, the end portions 12 of the two straps 11 can be bound together by the buckle 10.

As a result, the use of the buckle 10 according to the present embodiment allows a process applied to the end portion of the strap 11 and binding of the end portions 12 of the strap 11 to be performed simultaneously, so that an additional binding operation can be omitted.

In the present embodiment, the press portion 50 is so formed on the plug 30 as to press the strap 11 that has been accommodated in the accommodation portion 23 against the holding portions 40 in a state where the socket 20 and plug 30 are engaged with each other. As a result, the strap 11 in the accommodation portion 23 is pressed by the press portion 50, so that the holding portions 40 can surely lock the end portion 12 of the strap 11.

Particularly, in the initial stage of the locking of the end portion 12 of the strap 11, the pressing of the press portion 50 allows the end portion 12 of the strap 11 to deeply enter into the holding portions 40. Therefore, the subsequent pull force to be applied to the strap 11 can surely allow the strap 11 to enter into the holding portion 40 further deeply.

In the present embodiment, the press portion 50 is so positioned as to be nearer to the opening 22 for plug than the holding portions 40 in an engaging state between the socket 20 and plug 30. Thus, when being pressed against the holding portions 40, the strap 11 is bent in a crank-shape due to misalignment between the holding portions 40 and press portion 50 in the direction of the insertion axis 13, increasing resistivity to pull force applied to the strap 11 and contributing to reduction of the length of the main body 14 in the direction of the insertion axis 13.

In the present embodiment, the holding portion 40 is formed by the ridge portion 41 continued from a part of the socket 20. This eliminates the need of separately manufacturing the holding portions 40 and attaching it to the socket 20, facilitating a manufacturing process. In particular, in the case where the socket 20 is resin-molded, the socket 20 and holding portions 40 are integrally formed to improve the efficiency of a manufacturing process.

In the present embodiment, the ridge portion 41 has an inclined plane 42 that is inclined relative to the insertion axis 13 in the direction opposite to the opening 21 for strap, the substantially V-shaped cut portion 43 is formed in the inclined plane 42, and the pair of the holding portions 40 is formed by the periphery along the inclined plane 42 of the cut portion 43. With the above configuration, the holding portions 40 can be easily formed.

In the pair of holding portions 40, the inclination relative to each other can be set depending on the arrangement angle of the V-shaped cut portion 43, and the inclination relative to the insertion axis 13 can be set depending on the arrangement angle (angle of inclination A) of the inclined plane 42. Therefore, the angle of inclination A can arbitrarily be set with certainty, so that manufacturing can surely and easily be performed.

In the present embodiment, the angle of inclination A between the holding portions 40 and insertion axis 13 is set to 60°, thereby maximizing the locking effect for the strap 11 due to pull force.

A second embodiment of the present invention will next be described below.

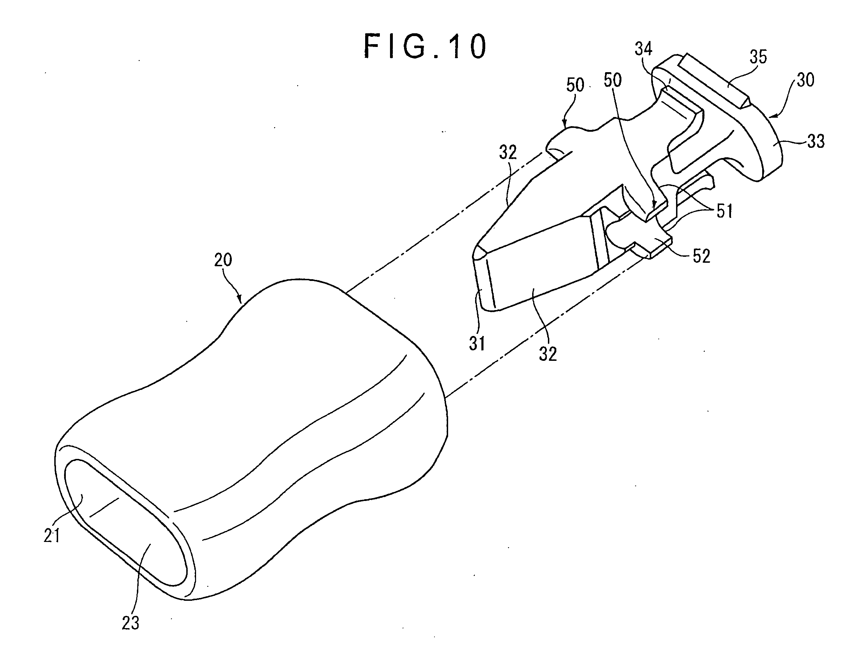

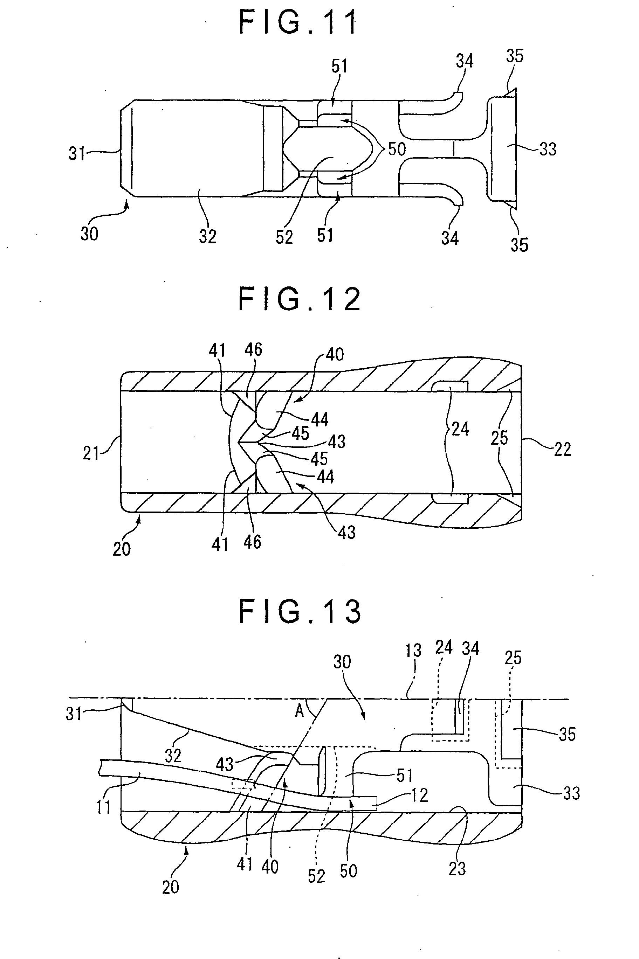

FIG. 10 is an exploded perspective view showing a socket and plug according to a second embodiment of the present invention, FIG. 11 is a side view of the plug according to the second embodiment, FIG. 12 is a vertical cross-sectional view of the socket according to the second embodiment, and FIG. 13 is a partly omitted horizontal cross-sectional view showing an engaging state between the socket and plug according to the second embodiment.

The configuration of the second embodiment is basically the same as that of the above-mentioned first embodiment. Therefore, the same reference numerals as the first embodiment are given to the components which are common to the first embodiment, and the overlapped description is omitted. In the following, configurations unique to the second embodiment will be described below.

The configurations of the socket 20 and plug 30 are basically the same as those of the first embodiment except that the outline of the socket 20 is concaved in the central portion thereof. However, there is no functional difference from the first embodiment. Further, the configuration around the holding portions 40 is the same as that of the first embodiment.

As to the plug 30, although the tapered leading end 31 and configuration around the cap 33 are the same, the configuration around the press portion 50 differs from the first embodiment.

That is, the press portion 50 of the above first embodiment is a tapered projection, whereas the press portion 50 according to the second embodiment has a pair of upper and lower projected portions 51, between which a guide groove 52 is formed.

The projected portions 51 and guide groove 52 are so formed as to extend in the direction of the insertion axis 13 by a predetermined length. The guide groove 52 can accommodate the strap 11.

In particular, the guide groove 52 is formed in a direction suitable to guide the strap 11 forwarded from the leading end 31 and has a shape for holding the strap 11. That is, the inside width of the guide groove 52 is made narrower than the outer diameter of the strap 11. With this configuration, by pushing the strap 11 into the guide groove 52, the strap 11 can be engaged in the guide groove 52. Alternatively, interval at the entrance (the portion at which upper and lower portions of the guide groove 52 project) of the guide groove 52 may be made narrower than the depth side (inside width) of the guide groove 52.

In the present embodiment having the configuration as described above, before the engagement between the socket 20 and plug 30 is established, the end portion 12 of the strap 11 is introduced from the opening 21 for strap into the socket 20, followed by being further forwarded, and the end portion 12 is pulled out from the opening 22 for plug by a predetermined length. After that, the portion that has been pulled out from the opening 22 for plug is pushed into and allowed to be held by the guide groove 52. Under this situation, the leading end of the plug 30 is inserted into the socket 20. Since being held by the guide groove 52 at this time, the end portion 12 of the strap 11 is again introduced into the socket 20 together with the plug 30.

Therefore, by holding the end portion 12 of the strap 11 in the guide groove 52 of the press portion 50, the strap 11 is automatically introduced between the holding portions 40 as the plug 30 is moved into the inside of the socket 20. At the time when the plug 30 has been engaged with the socket 20, the strap 11 is pressed against the holding portions 40 by the press portion 50 and is tightly held between the holding portions 40.

Therefore, by forming the guide groove 52 in the press portion 50, it is possible to eliminate the need to pay attention to the position of the strap 11 when the strap 11 is allowed to be held between the holding portions 40.

A third embodiment of the present invention will next be described below.

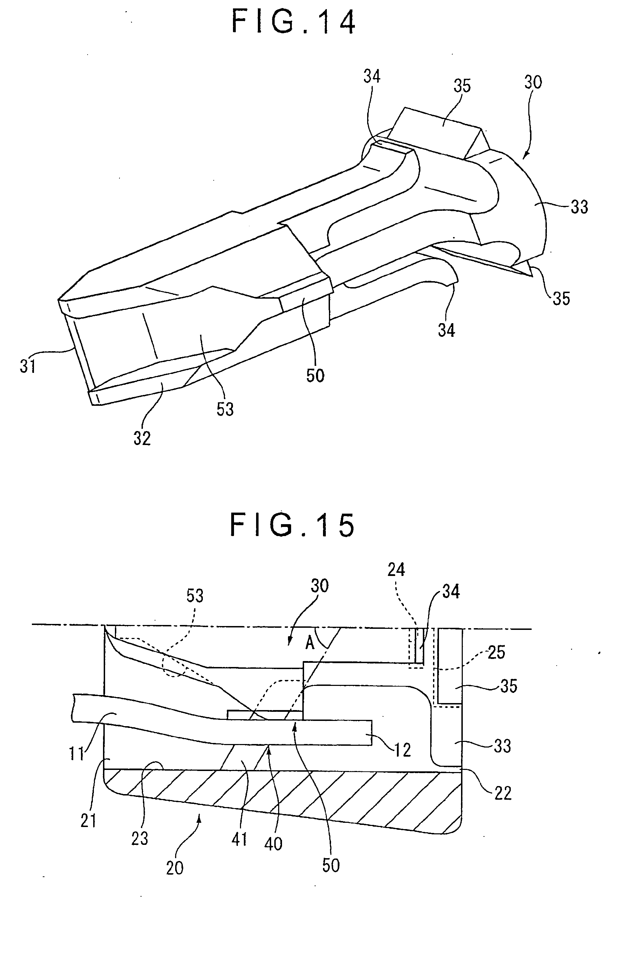

FIG. 14 is a perspective view showing of a plug according to the third embodiment and FIG. 15 is a partly omitted horizontal cross-sectional view showing an engaging state between the socket and plug according to the third embodiment.

The configuration of the third embodiment is basically the same as that of the above-mentioned first embodiment. Therefore, the same reference numerals as the first embodiment are given to the components which are common to the first embodiment, and the overlapped description is omitted. In the following, configurations unique to the third embodiment will be described below.

The configurations of the socket 20 and plug 30 are basically the same as those of the first embodiment. The socket 20 of the present embodiment is the same as that according to the first embodiment including the configuration around the holding portions 40.

As to the plug 30, although the entire shape and configuration around the cap 33 are the same, the tapered portion on the leading end 31 side and the configuration around the press portion 50 differ from the first embodiment.

More specifically, the press portion 50 of the above first embodiment is a tapered projection, whereas the press portion 50 of the present embodiment extends in the direction of the insertion axis 13 by a predetermined length. Further, in an engaging state between the socket 20 and plug 30, the press portion 50 faces the holding portions 40 and partly enters between the holding portions 40.

Further, a guide groove 53 is formed between inclined planes 32 extending from the leading end 31 of the plug 30 on both sides thereof in such a manner as to merge into the projected portion of the press portion 50.

With this configuration, by previously accommodating the end portion 12 of the strap 11 in the guide groove 53 of the press portion 50, the strap 11 is automatically introduced into the holding portions 40 as the plug 30 is moved into the inside of the socket 20. At the time when the plug 30 is engaged with the socket 20, the strap 11 is pressed against and tightly held between the holding portions 40. Therefore, it is possible to eliminate the need to pay attention to the position of the strap 11 when the strap 11 is allowed to be held between the holding portions 40.

Further, the press portion 50 is allowed to directly enter between the holding portions 40, so that the strap 11 can surely be held between the holding portions 40. Further, the press portion 50 is elongated in the direction of the insertion axis 13, so that inconvenience that the strap 11 is escaped from between the holding portions 40 and is not well accommodated in the buckle 10 can be prevented.

The present invention is not limited to the embodiments described above, and many variations and modifications may be made without departing from the sprit and scope of the present invention.

In the present invention, the holding portions 40 may be curved, and the angle of inclination A may be set to the average angle between an effective region that substantially holds the strap and the insertion axis.

That is, the holding portion 40 may be formed in a linear manner as well as a curved manner. For example, the angle of inclination between the holding portions 40 is made large at the entrance side thereof to make it easy to introduce the strap 11 between the holding portions 40. On the other hand, the angle of inclination between the holding portions 40 is made small at the depth side thereof to increase the locking effect for the strap 11 due to pull force. In this case, it is preferable that the angle of inclination A of the substantially effective region, which is the average angle related to the locking of the strap 11, fall within the above-mentioned angle range.

The configuration of the holding portion 40 is not limited to the two-tiered configuration which is constituted by the guide portions 44 and engagement portions 45. Alternatively, however, the holding portions 40 may have a three-tiered configuration, or have a configuration in which the angle of the periphery gradually increases to form a curved shape. Further, in the present invention, the holding portion 40 need not always have a multi-tiered configuration and may be configured in a simple V-shape as a whole.

The holding portion 40 is not limited to a configuration in which the cut portion 43 is formed in the plate-like ridge portion 41. Alternatively, however, after a stepped structure constituted by a projected portion on the opening 21 for strap side and a lower portion on the opening 22 for plug has been formed, the cut portion 43 may be so formed on the stepped surface, which functions as the inclined plane 42, caused in the stepped structure as to face the opening 22 for plug.

Further, after a pair of projections has been formed in a substantially V-shape manner, the insides thereof facing each other may be configured to be the holding portions 40. In short, the holding portion 40 may have any configuration as far as it has a substantially V-shape and arranged at a predetermined angle of inclination A relative to the insertion axis 13.

While two straps 11 are bound together in the above embodiments, it is only necessary that the buckle 10 can process the end portion of the single strap 11 in the present invention and it is accordingly sufficient to form a pair of holding portions 40 for a single strap 11. In the above embodiments, the holding portions 40 are included in the socket 20 and the press portions 50 are placed in the plug 30. Alternatively, however, the reverse configuration can be possible.

A measure for maintaining an engaging position between the plug 30 and socket 20 is not limited to the projection 34 for engagement and projection 35 for restraint. It is possible to use various existing positioning structures or the like.

Further, the buckle 10 need not always consist of two parts including the plug 30 and socket 20 as in the above-described embodiments. For example, a configuration in which a holding wire that softly holds the strap 11 is provided in the vicinity of the holding portions 40 of the socket 20 to guide the strap 11, and the strap 11 is locked due to pull force may be employed.

In aforesaid second embodiment, an auxiliary press portion 50A may also be provided in addition to the press portion 50, which has a pair of projected portions 51.

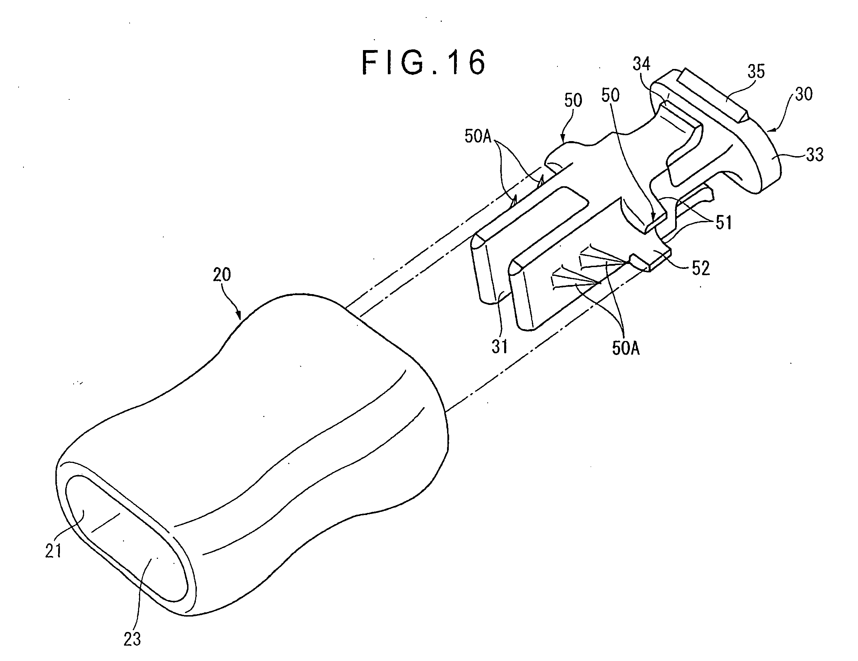

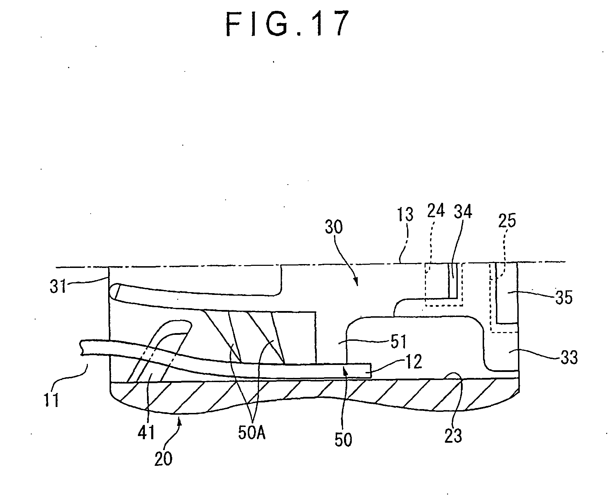

As shown in Fig.16 and Fig. 17, on the side of the leading end 31 of the press portion 50, which has a pair of projected portions 51, two auxiliary press portions 50A are provided along the direction of the insertion axis 13. Each press portion 50 has a sharpened shape with the tip thereof inclined toward the cap 33 side. With the press portions 50A, when the plug 30 is engaged with socket 20, the straps 11 can be securely pressed/ held on the side of the holding portions 40 by both the press portions 50 and the press portions 50A. In particular, since the press portion 50 has a sharpened shape with the tip thereof inclined toward the cap 33 side, the pulling-out preventive effect of the strap 11 can be enhanced.

## Claims

1. A buckle (10) that can accommodate an end portion (12) of a strap (11) along a predetermined insertion axis (13),
the buckle (10) including a socket (20) having a substantially tubular shape and a plug (30) to be inserted into and engaged with the socket (20),
the socket (20) having an opening (21) for strap, an opening (22) for plug through which the plug (30) is inserted into the inside of the socket (20), and an accommodation portion (23) that communicates with the opening (21) for strap and opening (22) for plug and accommodates the strap (11) by a predetermined length, wherein
one of the socket (20) or plug (30) has a pair of holding portions (40) that sandwiches and holds the strap (11) that has been accommodated in the accommodation portion (23), and
the other one of the socket (20) or plug (30) has a press portion (50) that presses the strap (11) that has been accommodated in the accommodation portion (23) against the pair of holding portions (40) in a state where the plug (30) is engaged with the socket (20).

2. The buckle (10) according to claim 1, wherein the pair of holding portions (40) has a substantially V-shape in which the distance between one end sides thereof is shorter than that between the other end sides thereof, and arranged in an inclined manner relative to the insertion axis (13) such that one end sides are situated nearer to the opening (21) for strap than the other end sides.

3. The buckle (10) according to claim 1 or claim 2, wherein the plug (30) has a tapered leading end (31) to be inserted into the accommodation portion (23) and a cap (33) that covers the opening (22) for plug on the side opposite to the tapered leading end (31).

4. The buckle (10) according to any of claims 1 to 3, wherein
the accommodation portion (23) has a space into which two straps (11) can be inserted in parallel, and
the plug (30) is inserted between the two straps (11) that have been accommodated in the accommodation portion (23).

5. The buckle (10) according to any of claims 1 to 4, wherein the press portion (50) is situated nearer to the opening (22) for plug than the pair of holding portions (40) in a state where the plug (30) is engaged with the socket (20).

6. The buckle (10) according to any of claims 1 to 5, wherein
the press portion (50) enters between the pair of holding portions (40) in a state where the plug (30) is engaged with the socket (20).

7. The buckle (10) according to any of claims 1 to 6, wherein the press portion (50) has a guide groove (52, 53) that restrains the position of the strap (11) and guides the strap (11) between the pair of holding portions (40) when the plug (30) is engaged with the socket (20).

8. The buckle (10) according to claim 7, wherein the guide groove (52, 53) can hold the strap (11) along the plug (30).

9. The buckle (10) according to claim 8, wherein an auxiliary press portion (50A) for pressing the strap (11) is provided on the press portion (50) on the side the opening (2 1 ) for the strap.

10. The buckle (10) according to any of claims 2 to 9, wherein the pair of holding portions (40) is formed by a ridge portion (41) continued from a part of the main body (14).

11. The buckle (10) according to claim 10, wherein
the ridge portion (41) has an inclined plane (42) that is inclined relative to the insertion axis (13) toward the side opposite to the opening (21) for strap,
a cut portion (43) having a substantially V-shape is formed on the inclined plane (42), and
the pair of the holding portions (40) is formed by the periphery along the inclined plane (42) of the cut portion (43).

12. The buckle (10) according to claim 11, wherein
in the pair of holding portions (40), the opposite sides thereof that are spaced apart from each other serve as widely-angled guide portions (44), and the opposite sides thereof that are approximate to each other serve as steeply-angled engagement portions (45).

13. The buckle (10) according to any of claims 2 to 12, wherein
the angle of inclination (A) between the pair of holding portions (40) and insertion axis (13) is set to not less than 30° and less than 90°.

14. The buckle (10) according to claim 13, wherein
the angle of inclination (A) between the pair of holding portions (40) and insertion axis (13) is set to not less than 45° and less than 80°.

15. The buckle (10) according to claim 14, wherein
the angle of inclination (A) between the pair of holding portions (40) and insertion axis (13) is set to not less than 55° and less than 65°.

16. The buckle (10) according to any of claims 1 to 12, wherein
the pair of holding portions (40) is curved, and the angle of inclination (A) is the average angle between an effective region that substantially holds the strap (11) and the insertion axis (13).
